# EUROPÄISCHE PATENTSCHRIFT

(11) **EP 2 055 112 B1**
(45) Veröffentlichungstag und Bekanntmachung des Hinweises auf die Patenterteilung: **19.04.2017**
(21) Anmeldenummer: 07801805.8
(22) Anmeldetag: 22.08.2007
(51) Int. Cl.: H04Q 3/00

(54) **KOMMUNIKATIONSNETZ MIT LEITUNGS- UND PAKETVERMITTELNDER STEUERUNG**
COMMUNICATION NETWORK WITH LINE- AND PACKET-SWITCHING CONTROL
RÉSEAU DE COMMUNICATION AVEC COMMANDE DE COMMUTATION DE CIRCUITS ET DE PAQUETS

(30) Priorität: 23.08.2006 DE 102006039430
(43) Veröffentlichungstag der Anmeldung: 06.05.2009
(73) Patentinhaber: T-Mobile International AG, 53227 Bonn (DE)
(72) Erfinder: JACOBSOHN, Dieter, 53229 Bonn (DE); NENNER, Karl-Heinz, 53332 Bornheim (DE); DEMEL, Sabine, A-1210 Wien (AT)
(74) Vertreter: Riebling, Peter
(86) Internationale Anmeldenummer: PCT/EP2007/007373
(87) Internationale Veröffentlichungsnummer: WO 2008/022775

(56) Entgegenhaltungen:
- WO-A-96/38018
- LAUTENBACHER M E ET AL: "INTELLIGENT INTERNET: VALUE-ADDED SERVICES BY INTERWORKING BETWEEN NETWORK TECHNOLOGIES" XVI WORD TELECOM CONGRESS PROCEEDINGS (ISS'97), Bd. 2, 21. September 1997 (1997-09-21), - 26. September 1997 (1997-09-26) Seiten 45-51, XP000704454
- LAKSHMI-RATAN R A: "THE LUCENT TECHNOLOGIES SOFTSWITCH - REALIZING THE PROMISE OF CONVERGENCE" BELL LABS TECHNICAL JOURNAL, WILEY, CA, US, Bd. 4, Nr. 2, April 1999 (1999-04), - Juni 1999 (1999-06) Seiten 174-195, XP000851517 ISSN: 1089-7089

## Beschreibung

Die Erfindung betrifft einen alternativen Vorschlag zur Realisierung von Telekommunikationsdiensten sowohl in leitungsvermittelnden als auch in paketvermittelnden Telekommunikationsnetzen.

### Stand der Technik

Bei aus dem Stand der Technik bekannten Telekommunikationsnetzen, bei welchen der Schwerpunkt auf Telefoniediensten liegt, wie zum Beispiel bei der Sprachtelefonie sowie den zugehörigen Mehrwertdiensten, wie zum Beispiel bei einer Anrufweiterleitung, werden so genannte leitungsvermittelte Kanäle zur Übertragung der Nutzkanäle (z.B. Sprache) benutzt.

Zusätzlich benutzen derartige Telekommunikationsnetze spezielle Protokolle auf der Grundlage des CCITT Signalling System #7 (SS7) zur Steuerung des Auf- und Abbaus dieser Nutzkanäle, wobei das SS7 eine Weiterentwicklung des SS5 bzw. des SS6 ist, bei welchen die Signalisierung mittels Verwendung bestimmter Töne zwischen den Vermittlungsstellen ausgeführt wurde.

Dieses CCITT Signalling System #7 (SS7) ist derzeit das am meisten verwendete Signalisierungssystem in nationalen und internationalen Telekommunikationsnetzen, wobei in der Folge dieser Popularität diverse Protokolle des SS7-Stapels derzeit auch für SS7oIP - Anwendungen spezifiziert, entwickelt und eingesetzt werden.

Darauf aufbauend gibt es Mehrwertdienste, die eine zusätzliche Logik im Vermittlungsknoten oder in externen Knoten eines so genannten "Intelligenten Netzes" (IN) nutzen.

Nutzkanäle eines leitungsvermittelnden Netzes weisen die Eigenschaft auf, dass die beim Verbindungsaufbau eingerichtete Bandbreite grundsätzlich für die Dauer der Verbindung auf der Strecke zwischen dem Anrufer und dem Angerufenen reserviert ist.

Bei der Signalisierung zur Steuerung von Verbindungen unterscheidet man zwischen:
- Signalisierung zwischen den Endgeräten und dem Netzendpunktknoten (UNI); und
- Signalisierung innerhalb des Netzes, d.h. zwischen netzinternen Knoten (NNI).

So wird zum Beispiel in ISDN-Netzen das Protokoll EDSS-1 und in Mobilfunknetzen nach GSM-Standard DTAP für UNI verwendet.

Für eine Signalisierung zwischen netzinternen Knoten innerhalb des Netzes verwenden beide Teilnetze ISUP sowie weitere Protokolle aus SS7. In allen vorgenannten Fällen stehen für die Signalisierung dedizierte Übertragungskanäle zur Verfügung, die getrennt von den Nutzkanälen (z.B. Sprache) verwaltet werden.

Ursprünglich konzipierte Datendienste in leitungsvermittelnden Netzen sind praktisch vollkommen durch paketvermittelnde Netze unter Nutzung internetartiger Techniken ersetzt worden.

Diese Netze bauen keine fest reservierten Kanäle zwischen den Kommunikationspartnern auf, sondern benutzen eine vorwiegend breitbandige Verbindung mittels des bekannten statistischem Multiplexing-Verfahren gemeinsam mit andern Datenströmen, wobei das Multiplexing-Verfahren Methoden zur Signal- und Nachrichtenübertragung verwendet, bei denen mehrere Signale zusammengefasst und simultan über ein Medium, wie zum Beispiel eine Leitung, ein Kabel oder eine Funkstrecke übertragen werden.

Soll ein derartiges Netz für Telefoniedienste genutzt werden, erfolgt die hierzu notwendige Signalisierung nicht auf Netz- sondern auf Applikationsebene entsprechend dem Paradigma des Internets.

Aus diesem Grund gibt es auch keine fest zugeordneten Signalisierungskanäle, sondern die Signalisierung erfolgt über die gleichen Kanäle wie die Übertragung der Nutzdaten (Applikationsebene).

Die Signalisierung findet dabei im einfachsten Fall zwischen den beteiligten Endgeräten statt.

Jedoch ist aber auch die Kommunikation der Endgeräte mit einem zwischengeschalteten Applikationsserver zur Realisierung zusätzlicher Netzkontrolle und/oder Mehrwertdienste oder dergleichen möglich.

Eine Unterscheidung zwischen UNI und NNI besteht jedoch nicht.

Die heute im Einsatz befindlichen Lösungen nutzen dabei üblicherweise das "Session Initiation Protocol" SIP.

Unabhängig von der Übertragungstechnologie gibt es Vor- und Nachteile der Nutzung der leitungsvermittelnden und paketvermittelnden Telekommunikations(teil-)netze.

Aus dem Stand der Technik sind getrennte Steuerungen für diese leitungsvermittelnde und paketvermittelnde Telekommunikations(teil-)netze bereits bekannt.

Im Zuge der allgemeinen Entwicklung zum Internet erscheint es nunmehr auch für Betreiber "traditioneller" Telekommunikationsnetze sinnvoll, einen Teil ihrer Telekommunikationsdienste über paketvermittelnde Netze abzuwickeln und die entsprechenden Steuerungen auch für den leitungsvermittelnden Teil des Kommunikationsnetzes zu benutzen.

Der wesentliche Vorteil ist eine abgestimmte, synchronisierte Nutzung sowohl leitungsvermittelnder als auch paketvermittelnder Teile von Kommunikationsanlagen.

Jedoch führt dies aber zu nachfolgenden entscheidenden Nachteilen:
- Der Netzbetreiber muss eine vollkommen neue Protokollwelt, basierend auf SIP etablieren, um seine bekannten Telephoniedienste weiterzuführen.
- Entsprechend müssen alle Mehrwertdienste auf der Basis von SIP mit Hilfe spezieller Applikationsserver aufwändig neu implementiert werden. Dies gilt sowohl für Dienste, die heute auf integrierter Logik in den Vermittlungsknoten basieren, als auch für IN-basierte Dienste.
- Die entsprechende Steuerung muss sowohl leitungsvermittelnde als auch paketvermittelnde Funktionen enthalten, die in ihren Anforderungen sehr unterschiedlich sind.

Mit der Veröffentlichung Lautenbacher M E ET AL "Intelligent Internet: Value-Added Services By Interworking Between Network Technologies" XVI World Telecom Congress Proceedings (ISS'97) wird ein Kommunikationsnetz mit leitungs- und paketvermittelnder Steuerung offenbart, wobei Telekommunikationsdienste mittels Anbindung einer Steuereinrichtung an ein Kommunikationsnetz ausgeführt sind und eine zumindest teilweise gemeinsame synchronisierte Steuerung für sowohl den leitungsvermittelnden als auch den paketvermittelnden Teil der Kommunikationsanlage ausgebildet ist und die Telekommunikationsdienste ausführt.

Dieser Veröffentlichung ist nicht zu entnehmen, dass eine unveränderte Ausführung von gleichen Diensten und Services im paketvermittelnden als auch im leitungsvermittelnden Kommunikationsteilnetz für den Nutzer möglich ist.

Mit der Veröffentlichung LAKSHMI-RATAN R A: "The Lucent Technologies Softswitch - Realizing The Promise Of Convergence" Bell Labs Technical Journal, Wiley, CA, US - Bd. 4, Nr. 2 April 1999 (1999-04), - Juni 1999 (1999-06) wird ein PROGRAMMIERBARES Sprachverarbeitungssystem von PSTN/IP Protokollen für bekannte Betriebsysteme offenbart, welches äußere Netzknotenpunkte, Zugangsschnittstellen und RAS (remote access server) steuert und Internetdienste durch eine offene und flexible Richtungsschnittstelle ausführt, und offene Anmeldeprogrammschnittstellen zur Erzeugung von weiterentwickelten Diensten zur Verfügung stellt, wobei Abwicklungseigenschaften von Dienstanbietem programmierbar sind und ein erweitertes, serverbasiertes Verfahrensmanagement aufweist.

Dieser Veröffentlichung ist ebenfalls nicht zu entnehmen, dass eine unveränderte Ausführung von gleichen Diensten und Services im paketvermittelnden als auch im leitungsvermittelnden Kommunikationsteilnetz für den Nutzer möglich ist.

Mit der Druckschrift WO 96/38018A wird ein Verfahren und System zur Herstellung einer Sprachverbindung zwischen zwei Endgeräten in einem intelligenten Netz und Datennetz offenbart, wobei eine Meldung des ersten Endgerätes eine Datennetzadresse des zweiten Endgerätes einschließt und über einen Zugang in das Netz übermittelt, um Adressdaten des Benutzers des ersten Endgerätes zu aktualisieren und wobei das intelligente Netz den Verbindungsaufbau zwischen den Benutzern steuert.

Dieser Druckschrift ist nicht zu entnehmen, dass gleichen Dienste und Services im paketvermittelnden als auch im leitungsvermittelnden Kommunikationsteilnetz für den Nutzer ausgeführt werden.

Aufgabe der vorliegenden Erfindung ist es, den technischen als auch finanziellen Aufwand zur Umrüstung eines Kommunikationsnetzes mit einer synchronisierten Steuerung relativ gering zu halten.

Diese Aufgabe wird erfindungsgemäß durch die technische Lehre der unabhängigen Patentansprüche gelöst, auf deren Inhalt an dieser Stelle verwiesen wird.

Aus den vorbenannten Gründen erscheint es als notwendig eine aus dem Stand der Technik bekannte Steuerung derart weiterzubilden, dass eine synchronisierte Steuerung für sowohl den leitungsvermittelnden als auch den paketvermittelnden Teil der Kommunikationsanlage einzusetzen ist.

Im Gegensatz zu den bekannten Verfahren, in welchen getrennte Steuereinrichtungen für den leitungsvermittelnden als auch den paketvermittelnden Teil der Kommunikationsanlage eingesetzt werden, wird hier eine gemeinsame Steuereinrichtung verwendet.

Der Vorteil einer derartigen Abwicklung von Telekommunikationsdiensten ist, dass durch eine Kombination von leitungsvermittelnden als auch paketvermittelnden Teilen von Kommunikationsnetzen eine wesentlich höhere Effizienz der einzelnen Teile erreicht wird.

Somit ist die Verwendung einer nutzungsabhängigen Steuerung innerhalb eines derartiger Kommunikationsnetze vorgesehen und möglich.

Bei der erfindungsgemäßen Ausführung einer derartigen Anbindung an ein Kommunikationsnetz entstehen somit für den Nutzer grundlegende Vorteile.

So werden gleiche Dienste und Services sowohl im paketvermittelnden als auch im leitungsvermittelnden Kommunikationsteilnetz für den Nutzer unverändert ausgeführt.

Zum Beispiel wird eine Rufweiterleitung in jedem Falle gleich aufgebaut und gleich behandelt.

Ein weiterer Vorteil ist, dass der Kommunikationsnetzbetreiber Dienste völlig transportnetzunabhängig anbieten kann.

Darüber hinaus ist der Kommunikationsnetzbetreiber in der Lage alle existierenden Dienste und Services weiterhin anbieten zu können.

Zusätzlich ist eine beliebige Dienstekombination zwischen leitungsvermittelnden und paketvermittelnden Diensten gegeben.

Im Folgenden wird die Erfindung anhand von einer, lediglich einen Ausführungsweg darstellenden Zeichnung näher erläutert. Hierbei gehen aus der Zeichnung und ihrer Beschreibung weitere erfindungswesentliche Merkmale und Vorteile der Erfindung hervor.

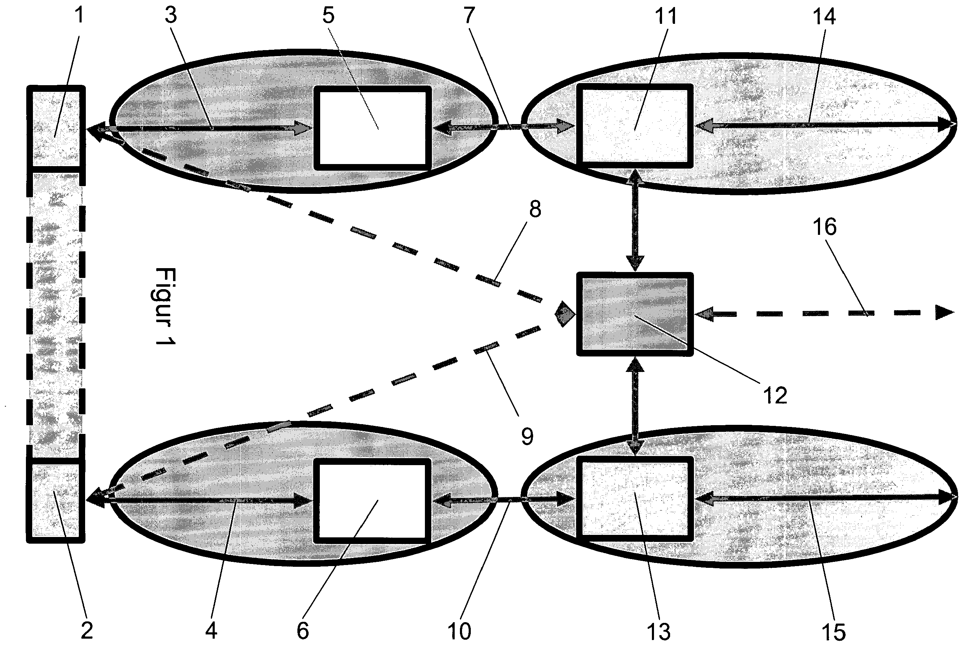

Dabei zeigt
- Figur 1:: eine grundlegende Anbindung einer Steuerungseinrichtung an ein Kommunikationsnetz.

Das in Figur 1 dargestellte Schaubild zeigt eine allgemeine Übersicht einer erfindungsgemäßen Ausführungsform einer nutzungsabhängigen Rufsteuerung 12, welche eine Kumulation zwischen den Kommunikationsphasen des paketvermittelnden Kommunikationsnetzes eines Endgeräte-Zugangsteils 1 mit einem leitungsvermittelnden Kommunikationsnetz eines Endgeräte-Zugangsteils 2 ausbildet.

Die Rufsteuerung 12 ermöglicht somit, dass zum Beispiel zusammen mit der Übermittlung von Sprache in einem Telekommunikationsnetz gleichzeitig ein Text oder ein Bild über das Internet gesendet wird. Hierzu ist die oben genannte Kumulation zwischen den beiden Kommunikationsphasen notwendig, welche durch ein entsprechende Rufsteuerung ausgeführt wird.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

### Bezugszeichenliste

- 1.: Endgeräte-Zugangsteil Teil 1
- 2.: Endgeräte-Zugangsteil Teil 2
- 3.: Zugangsnetz 1
- 4.: Zugangsnetz 2
- 5.: Transportkanalsteuerung
- 6.: Transportkanalsteuerung
- 7.: Daten
- 8.: UNI 1
- 9.: UNI 2
- 10.: Daten
- 11.: Transportkanal-Steuerung
- 12.: Rufsteuerung 1
- 13.: Transportkanal-Steuerung
- 14.: Verbindungsnetz 1
- 15.: Verbindungsnetz 2
- 16.: NNI 1

### Legende

- #SS7: Signalisierungssystem nach CCITT (Comite Consultatif International Télégraphique et Téléphonique)
- ISDN: integrated services digital network
- EDSS-1: digital subscriber signalling system no. 1 nach Euro-ISDN
- UNI: user network interface
- NNI: network node interface
- GSM: global system mobile
- ISUP: ISDN user part
- Multiplexing: Methode zur Signal- und Nachrichtenübertragung, bei denen mehrere Signale zusammengefasst und simultan über ein Medium (Leitung, Kabel, Funkstrecke) übertragen werden
- SIP: session initiation protocol (SIP-Protokoll)

## Patentansprüche

1. Kommunikationsnetz mit leitungs- und paketvermittelnder Steuerung, wobei Telekommunikationsdienste, wie zum Beispiel eine Rufweiterleitung mittels Anbindung einer Steuereinrichtung an ein Kommunikationsnetz ausgeführt ist, wobei die Steuereinrichtung als eine zumindest teilweise synchronisierte Steuereinrichtung (12) zur Verwendung für sowohl den leitungsvermittelnden als auch den paketvermittelnden Teil des Kommunikationsnetzes ausgebildet ist, **dadurch gekennzeichnet, dass** die synchronisierte Steuereinrichtung (12) gleiche Dienste und Services im paketvermittelnden als auch im leitungsvermittelnden Kommunikationsteilnetz für den Nutzer unverändert ausführt, wobei der Kommunikationsnetzbetreiber Dienste völlig transportnetzunabhängig anbieten kann und eine beliebige Dienstekombination zwischen leitungsvermittelnden und paketvermittelnden Diensten gegeben ist.

2. Verfahren zum Betrieb eines Kommunikationsnetzes gemäß Anspruch 1, **dadurch gekennzeichnet, dass** die Telekommunikationsdienste transportnetzunabhängig ausgeführt werden.

## Claims

1. Communications network with line- and packet-switching control, wherein telecommunications services, for example call forwarding, are performed by connecting a control device to a communications network, wherein the control device is designed as an at least partially synchronised control device (12) for use for both the line-switching and the packet-switching part of the communications network, **characterised in that** the synchronised control device (12) performs the same services in the packet-switching and in the line-switching part of the communications network without change for the user, wherein the communications network operator can provide services completely independently of the transmission network, and any combination of services between line-switching and packet-switching services is provided.

2. Method for operating a communications network according to claim 1, **characterised in that** the telecommunications services are performed independently of the transmission network.

## Revendications

1. Réseau de communication avec commande de commutation de circuits et de paquets, des services de télécommunication comme par exemple un transfert d'appel étant réalisés à l'aide de la connexion d'un dispositif de commande à un réseau de communication, le dispositif de commande étant conçu comme un dispositif de commande (12) au moins en partie synchronisé, pour une utilisation aussi bien pour la partie de commutation de circuits que pour la partie de commutation de paquets du réseau de communication, **caractérisé en ce que** le dispositif de commande synchronisé (12) exécute les mêmes services dans la partie de commutation de paquets et dans la partie de commutation de circuits du réseau de communication sans changement pour l'utilisateur, étant précisé que l'opérateur de réseau de communication peut offrir des services entièrement indépendamment du réseau de transport, et qu'il y a n'importe quelle combinaison de services entre des services de commutation de circuits et de commutation de paquets.

2. Procédé pour l'exploitation d'un réseau de communication selon la revendication 1, **caractérisé en ce que** les services de télécommunication sont exécutés indépendamment du réseau de transport.
